# EUROPEAN PATENT SPECIFICATION

(11) **EP 1 697 111 B1**
(45) Date of publication and mention of the grant of the patent: **03.06.2009**
(21) Application number: 04801260.3
(22) Date of filing: 02.12.2004
(51) Int. Cl.: B29D 11/00, B29C 37/00

(54) **METHOD FOR HANDLING AN OPHTHALMIC LENS**
VERFAHREN ZUR HANDHABUNG EINER OPHTHALMISCHEN LINSE
PROCEDE DESTINES A MANIPULER UNE LENTILLE OPHTALMOLOGIQUE

(30) Priority: 23.12.2003 GB 0329831
(43) Date of publication of application: 06.09.2006
(73) Proprietor: BAUSCH & LOMB INCORPORATED, Rochester, New York 14604-2701 (US)
(72) Inventor: WARDROP, Fraser, Edinburgh, EH8 8JA (GB); O'NEILL, Trevor, Tramore, Co. Waterford (IE)
(74) Representative: Wallace, Sheila Jane
(86) International application number: PCT/GB2004/005066
(87) International publication number: WO 2005/061212

(56) References cited:
- EP-A- 0 515 149
- US-A- 6 113 817
- US-A1- 2003 041 449
- US-A1- 2003 160 343
- US-B1- 6 558 584

## Description

### Background of the Invention

The present invention generally relates to industrial automated material handling. More particularly, the present invention relates to a method as claimed in claim 1. The invention is also applicable to other types of ophthalmic lenses, for example, spectacle and intraocular lenses.

Static cast molding of contact lenses is known. See, for example, U.S. Patent No. 5,466,147 issued to Bausch & Lomb Incorporated. A single mold unit comprises a female mold section having a concave optical surface and a male mold section having a convex optical surface. The female and male mold sections are complimentary shaped and mateable to form a lens-molding cavity between the facing concave and convex optical surfaces of the female and male mold sections, respectively. Molding and handling of lenses air also discussed in US-A-6 558 584, US-A-6 113 617 EP-A-515 749, US 2003/160 343, US 2003/041 449.

The basic process for cast molding a lens is as follows. A quantity of liquid lens material (monomer) is dispensed into the concave optical surface of the female mold section and the male mold section is seated upon the female mold section with the concave and convex surfaces thereof facing one another to form a lens-shaped mold cavity. The joined female and male mold sections form a single mold unit which is subject to a curing cycle (e.g., by thermal or UV radiation) thereby causing polymerization of the lens material in the mold cavity. Once the lens material has cured, the male and female mold sections must be separated to retrieve the cured lens.

The opening or release of the mold sections must be carried out in a manner which will not harm the delicate lens. Once the lens has polymerized in the mold cavity, the lens and any lens flash will have an adhesive bond to the opposite concave and convex mold surfaces. Thus, the release of the male mold section from the female mold section must be of a force strong enough to break the adhesive bond of the lens and lens flash to the opposing mold surfaces, yet not so strong or haphazard that the optical surfaces of the lens are harmed by the release process. Should the lens crack or be otherwise damaged during the mold release process, the lens must be scrapped, thereby lowering the output yield and increasing manufacturing costs.

Once the mold sections have been separated, the lens must be released from the mold section on which it is retained. Both wet and dry release methods of lens release have been proposed in the prior art. In wet lens release methods, an aqueous solution is used to wet the hydrophilic lens which thereby absorbs water and swells, causing the lens to separate from the mold surface. This method may also be used in the mold release procedure. In dry lens release methods, a force is applied to break the bond between the lens and mold surface. For example.

Detaching a lens from a mold by deforming the mold body relative to the lens is seen in U.S. Patent No. 4,909,969 issued to Wood. In this method, the mold body is compressed by using successively smaller diameter plungers which engage the interior of the mold resulting in a compressive force being applied to the mold wall. Permanent deformation of the mold body results with the lens ultimately detaching therefrom. A similar result can be accomplished by application of a pinching or squeezing force to the mold body. In the case of a male and female mold unit, the squeezing force is applied to one or both mold sections which deforms the mold, thereby assisting in release of the female from the male mold section. In another prior art method, a pin is used to apply a force to the non-optical surface of the female mold to which the dry lens remains adhered following mold separation. This method is disclosed in commonly owned U.S. Patent No. 6,558,584, (see Figs. 9A-D thereof). One drawback of the '584 method is the inability to adapt the dry release mechanism to other lens SKUs "on the fly" so to speak. More particularly, lenses having different characteristics such as power and diameter and base curve will require different force and acceleration profiles to be applied against their associated mold half to effectuate a release which will not damage the lens. In the '584 patent, the force and acceleration profile of the piston which drives the pin therein is not programmable to other force and acceleration profiles and further cannot achieve a high precision of accuracy in its stroke distance setting. It is therefore not very adaptable when changing over to a different lens SKU.

Another factor to consider is how well the proposed mold release apparatus and method performs in a high speed automation environment, a very critical cost-to-manufacture consideration in today's highly competitive contact lens industry. In many of the above prior art methods, the ability to consistently control the release operation degrades once applied to a high speed automated manufacturing line.

Yet another consideration is lens handling. Since contact lenses are extremely delicate, small articles of manufacture having precise optical surfaces, they must be handled with extreme care so as to not damage the lens and increase costs to the manufacturing operation. It is thus an object of a contact lens automation line to use a contact lens handling system which keeps the lenses from having to be directly touched by the handling machinery. In the case where the lenses must be transferred from the mold in which they were formed to a separate package for downstream processes (e.g., hydration) or for final packaging to the consumer (e.g., transfer to a blister package), the lenses must undergo some amount of handling to effectuate this transfer process. In prior art methods, lenses have been transferred manually by an operator using a pair of tweezers to grasp the lens and transfer it from the mold to a package receptacle. This, of course, is an extremely labor intensive method of lens handling and also creates a high chance of lens damage caused by the direct contact with the tweezers and the operator's inability to consistently control the amount of force used with the tweezers when handling a lens therewith.

When transfer of the lens to a separate container is required as discussed above, it may be preferred to perform a dry lens release from the mold since the lens may be easier to handle in a manufacturing line when in a dry state as opposed to a wet state. This is since in the wet state of a soft contact lens, the lens is very flexible and prone to sticking and folding which could cause difficulties with the handling apparatus.

Prior to transfer of the lens to a separate container, other process steps may be performed such as lens inspection, for example.

There remains a need for an apparatus and method for dry releasing a contact lens from its associated mold section and transferring the lens between subsequent process steps and containers which is capable of adapting to multiple lens SKUs and otherwise has robust and consistent performance in a high speed, automated manufacturing environment.

### Summary of the Invention

The present invention discusses the deficiencies of prior art dry lens release methods and apparatus by providing in a first aspect an apparatus and method for dry releasing a contact lens from its associated mold section in a manner which is non-destructive to the lens, and which is capable of adapting to multiple lens SKUs in a high speed automation in a manufacturing line. The invention provides an apparatus and method for transferring a dry contact lens from its associated mold section to a vision inspection station and subsequently to a separate receptacle and which allows for multiple lenses to be processed simultaneously at each release/inspection/transfer station.

More particularly, the present invention discusses an in-line manufacturing cell which is operable to accept individual contact lens mold sections each containing a cured lens therein, release the lens from its associated mold section, lift and present the lens to an inspection station, and then transfer the lens to a separate receptacle.

Thus, prior to entering the lens release, inspection and transfer cell, the mold units have been subjected to a curing process to cure the lens material, and the female and male mold units have been separated to reveal the lens which is retained on one of the mold surfaces. In the preferred embodiment of the invention, the lens is retained in the female (concave optical molding surface) mold section. Preferentially retaining a lens in a desired mold section is known in the art, and may be accomplished by a variety of methods, including, for example, the mold configuration and geometry of the respective surfaces; electro-chemical or other surface treatments to one of the mold surfaces; and/or using different materials to make the male and female mold sections, thereby causing one mold section to have a greater affinity to the lens material as compared to the other mold section.

A predetermined number of mold sections with lenses retained therein are positioned on a mold pallet or other suitable support which positions the mold units in a predetermined array on the pallet. The pallet is advanced into the lens release and transfer cell which transports the pallet with mold sections thereon to a lens release station within the cell. The pallet is configured with an array of floating pins on which the non-optical surface of a respective array of mold sections rests. At the lens release station, the pins ride over an anvil causing the pins to rise with respect to the pallet base thereby also raising their respective mold sections. In the raised position, the mold section upper shoulder is raised above the pallet base and is supported by the pin. A servo-driven annulus is lowered onto the mold section and presses against the upper shoulder surface. The force of the annulus against the mold section shoulder, together with the pin contacting and supporting the non-optical surface thereof from beneath, causes the mold section to deform and thereby releasing the lens from its respective mold section. Once the lens has released from its associated mold section, the annulus is raised and the lens is picked by a lens picker (e.g., by a vacuum finger). At this point, the lens picker may then transfer the lens to another station, e.g. a lens inspection station. Assuming the lens has passed inspection, the lens picker transfers the lens to a separate receptacle, e.g., a blister package for subsequent processing and final packaging therein. If the lens fails inspection, the lens picker instead deposits the lens in a trash bin.

The invention describes a single lens release/inspection/transfer process station includes three lens pickers arranged in annularly spaced relation about a rotating circular plate positioned above the station with a plurality of mold sections being arranged on the pallet in longitudinally spaced relation. The station further includes the lens inspection apparatus which may take the form of the device disclosed in co-pending application publication number 2003/0103201-A1. The inspection apparatus, the lens release mechanism, and the separate receptacle are arranged in an annular array to align with the three annularly spaced lens pickers positioned thereabove. One complete cycle of the lens release, inspection and lens transfer station includes the steps of releasing the lens from its associated mold section, picking the lens, presenting the lens to the inspection apparatus, disposing of the lens if it fails inspection or transferring the lens to the receptacle if it passes inspection. Since there are three picker heads on the rotating plate, a total of three lenses may be processed simultaneously at each of the lens release, inspection and transfer substations at a time. In yet a further preferred embodiment of the invention, three lens release/inspection/transfer stations are configured in a single manufacturing module allowing further increases in efficiencies of manufacturing. Once a good lens has been deposited into its associated receptacle, the lens may be processed further as necessary (e.g., hydrated, packaged and sterilized).

### Brief Description of the Drawings

Figure 1A is a cross-sectional view of a de-coupled mold unit comprising a male mold section shown spaced above a complimentary female mold section;
Figure 1B is a cross-sectional view of the female mold section showing a molded lens retained on the concave surface of the mold section;
Figure 2 is the view of Figure 1A, except the male and female mold sections are joined for the curing stage of the lens;
Figure 3 is a plan view of an embodiment of the pallet;
Figure 3A is a cross-sectional view of the pallet taken through the line 3A-3A of Fig. 3 and further showing the female mold section and lens resting on the lowered floating pin of the pallet and a lens receptacle resting on a nest of the pallet adjacent the female mold section and lens;
Figure 3B is the view of Fig. 3A except the floating pin is in the raised position;
Figure 4 is a plan view of an embodiment of the invention having a total of three lens release/inspection/deposit stations arranged in linearly spaced relation;
Figure 5 is a side elevational view, partly in section, of the lens release portion of one of the three lens release/inspection/deposit stations shown in Figure 4;
Figure 6 is a side elevational view, partly in section, of part of the lens release portion and also the rotating lens picker head of the station.

### Detailed Description

The invention will be described and illustrated herein relative to but one of many possible embodiments of the invention. It is therefore understood that various parts of the invention as described herein may vary depending upon the specific lens molding operation employed. For example, changes may be made to accommodate a particular mold configuration being utilized, a particular upstream process such as the curing method, and/or particular downstream processes such as lens hydration and packaging, for example.

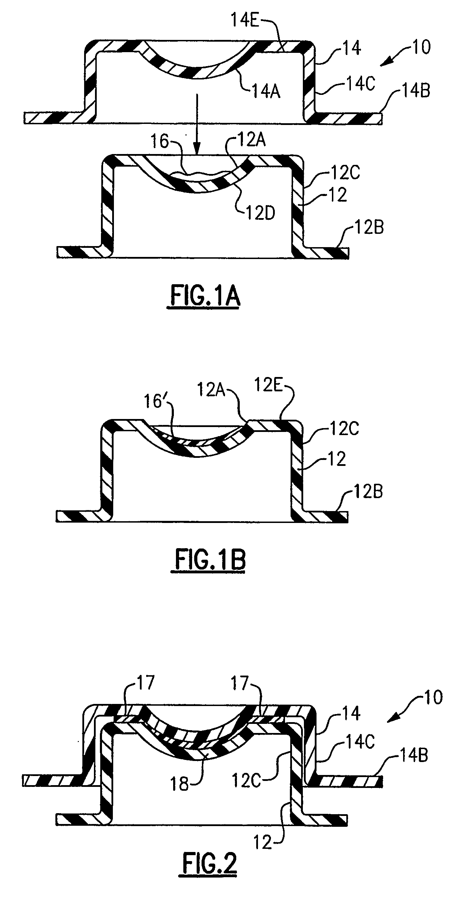

Referring now to the drawing, there is seen in Figures 1 and 2 a prior art contact lens mold unit 10 having a female mold section 12 and a complimentary male mold section 14 having respective concave and convex optical molding surfaces 12a, 14a. To mold a lens, a quantity of liquid lens material 16 (e.g., monomer) is dispensed into the female mold section and the male mold section is seated upon the female mold section which creates a lens-shaped mold cavity 18 defined by the facing optical mold surfaces 12a, 14a (see Fig. 2). Each mold section 12,14 includes a respective annular wall section 12C,14C which allows a sliding piston/cylinder type action as the male mold section 14 is seated upon the female mold section 12. Each mold section further includes an annular flat section 12E,14E extending radially outwardly of the associated mold surface 12A,14A, meeting associated annular wall portions 12C,14C at the outer perimeter of the annular flat section 12E,14E, respectively. Each mold section 12,14 further includes an annular flange 12B,14B extending radially outwardly of associated annular wall sections 12C,14C.

The mold sections 12, 14 are typically injected molded using polypropylene, polystyrene or polyvinylchloride, for example, and are used only once to a mold a single lens due to degradation of the optical surfaces thereof after molding of a lens therein. The quantity of monomer 16 dispensed in female mold section 12 is sufficient to permit a slight overflow of the monomer upon seating the male mold section 14 thereon which ensures a complete fill of the cavity to the periphery where the lens edge will form. Upon fully seating the male section upon the female section, the excess monomer flows radially outwardly of the mold cavity 18. Upon curing, this excess monomer forms an annular flash ring 17 between annular flat sections 12E,14E, commonly referred to as a "flash ring" or "monomer ring" in the art.

Thus, once a mold unit 10 has been filled and capped as seen in Fig. 2, it is subjected to a curing cycle which polymerizes the monomer inside the mold cavity 18. Typical contact lens curing methods include UV radiation and/or thermal (e.g., oven) curing. An accurate cure profile, whether using UV and/or thermal means to effectuate the cure, is determinable according to the mold and monomer type by those skilled in the art, and may also be determined by trial and error without undue experimentation. Once curing is complete, the male mold section 14 is separated from the female mold section 12 to reveal the lens 16' which has formed therein (Fig. 1B). The mold release process must break the adhesive bond between the mold sections, yet not damage the lens which remains on one of the mold surfaces. Suitable mold release processes are mentioned in the Background of the Invention. In the preferred embodiment described and illustrated herein, the lens 16' remains on the female concave optical surface12A at mold release as seen in Fig. 1B, and the lens flash 17 remains with the associated male mold section 14 (not separately shown), although this may vary depending on the specific mold configurations being used as desired. Thus, immediately following mold release, the lens 16' remains bonded to female mold surface 12a and is in the dry, rigid state (i.e., it has not yet been hydrated).

The present invention describes an apparatus and method for releasing a cured lens in the dry state from the mold section in which it is adhered following mold release.

The present invention provides a method for retrieving the loosened lens from the mold section and transferring the lens to a lens inspection apparatus followed by either a lens rejection or transferring the passed lens to a receptacle for subsequent lens processing and packaging.

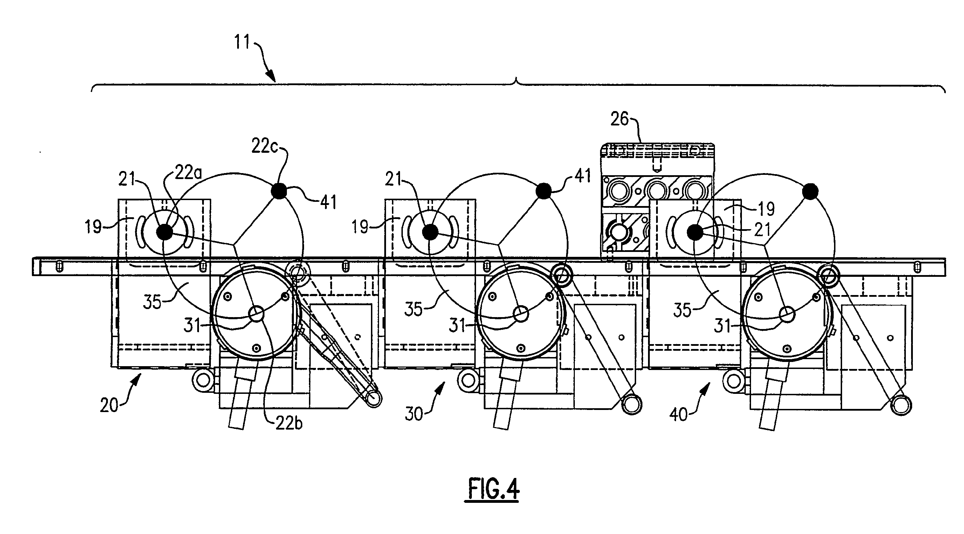

Figure 4 illustrates a plan view of a preferred embodiment of the invention which comprises a manufacturing module 11 preferably having three identical process stations 20, 30 and 40, each capable of performing a lens release/lens pick-up step from its associated mold section at substation 21, a lens inspection step at substation 31, and a lens transfer step at substation 41 of an acceptable lens to a separate receptacle, for example a disposable package in which the lens is packaged for shipping to the consumer. In the preferred embodiment and as seen best in Fig. 4, the three substations 21, 31 and 41 are arranged approximately 120° apart at their respective process station 20, 30, 40 for reasons explained below. Also, although a total of three process stations 20, 30 and 40 (with each having three substations 21, 31 and 41) are shown and described herein as a preferred embodiment, it is understood the invention is not so limited and may have any number of process stations including 1 or more.

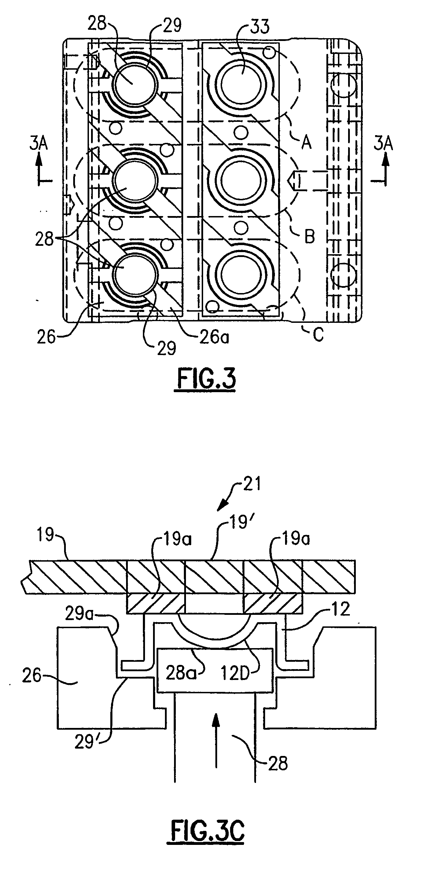

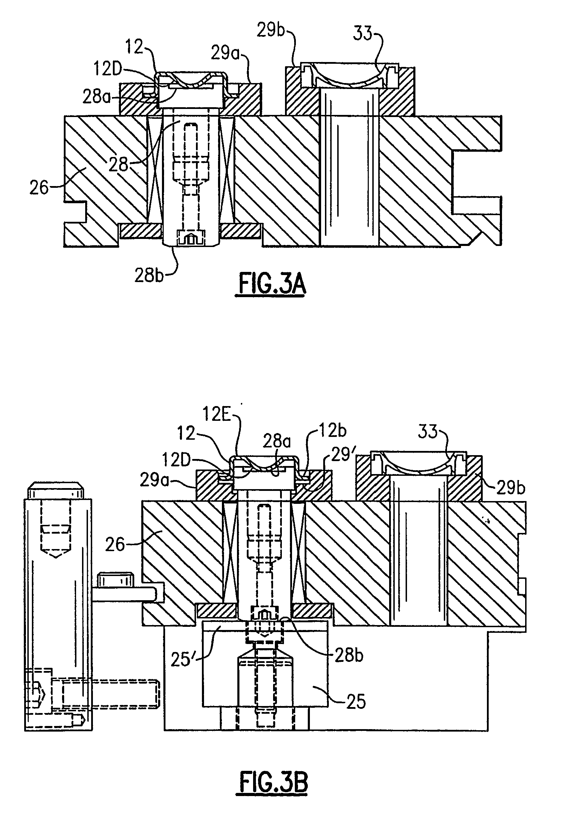

At the lens-release substation 21, female mold sections 12 having respective lenses 16' adhered thereto are presented, one at a time, to the dry release head 19 in a lens-side-up position on a mold pallet 26 (see Fig. 3, 3A, 3B). Mold pallet 26 includes at least one, but preferably more than one, and most preferably three linearly spaced pins 28 axially movable and positioned in a respective mold nest 29a. Pins 28 are axially movable between a normally lowered position seen in Fig. 3A and a raised position seen in Fig. 3B. In the raised position, the upper flat surface 28a of pin 28 engages the non-optical convex surface 12D of a respective mold section 12 (Fig. 3C). The pallet 26 may further include a groove 26a extending radially outwardly from the perimeter of each nest and are configured to permit a material handling mechanism (e.g., a pneumatic forceps) to extend through the groove and reach the mold section in the respective nest.

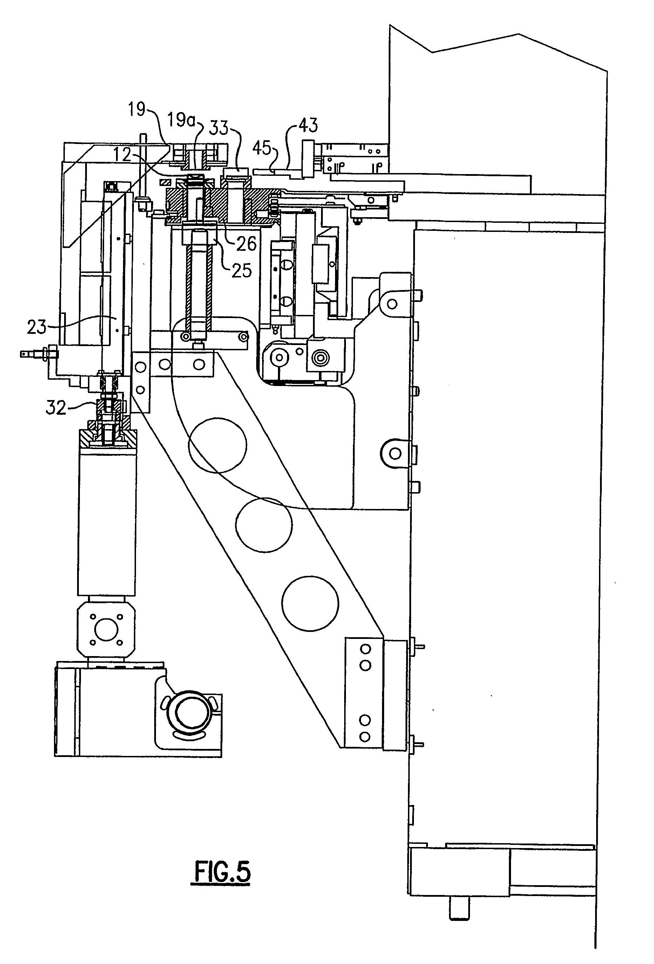

A plurality of pallets 26 are transported on a conveyor through module 11. Prior to reaching module 11, the pallet mold nests 29a have been populated with a respective mold section 12 each having a respective lens 16' adhered thereto. In the preferred embodiment, pallet 26 includes a like number of receptacle nests 29b positioned adjacent a respective mold nest 29a wherein a separate lens receptacle 33 may be placed (see Figs. 3A and 3B). In the preferred embodiment seen in Fig. 3, three pairs A, B and C of mold sections 12 and adjacent receptacles 33 are provided on a single pallet 26. The lens receptacle 33 may be in the form of a blister package in which the lens will be packaged for delivery to the consumer. As a pallet 26 reaches the dry release substation 21, the pin 28 rises as the flat bottom surface 28b thereof encounters and rides over the upwardly sloping surface 25' of anvil 25 located beneath the lens release substation (Fig. 3B). With pin 28 raised to the position seen in Figure 3B, the annular flange 12B of mold section 12 is also raised and becomes spaced above surrounding nest ledge 29'. At this time, the dry release head 19 is lowered over mold section 12 until an annulus 19a thereof contacts and presses against the upper shoulder surface 12E of the mold section 12. As seen in Fig. 5, the dry release head 19 is mounted via a linear slide 23 to a servo assembly 32 which allows the rate and force of the annulus 19a against the mold section 12 to be selectively varied. This is especially useful when changing the line over to a different lens SKU requiring different load forces to be applied to the mold section for safe lens release. The operator may thus program the servo 32 to the appropriate load parameters when changing the line from one lens SKU to another.

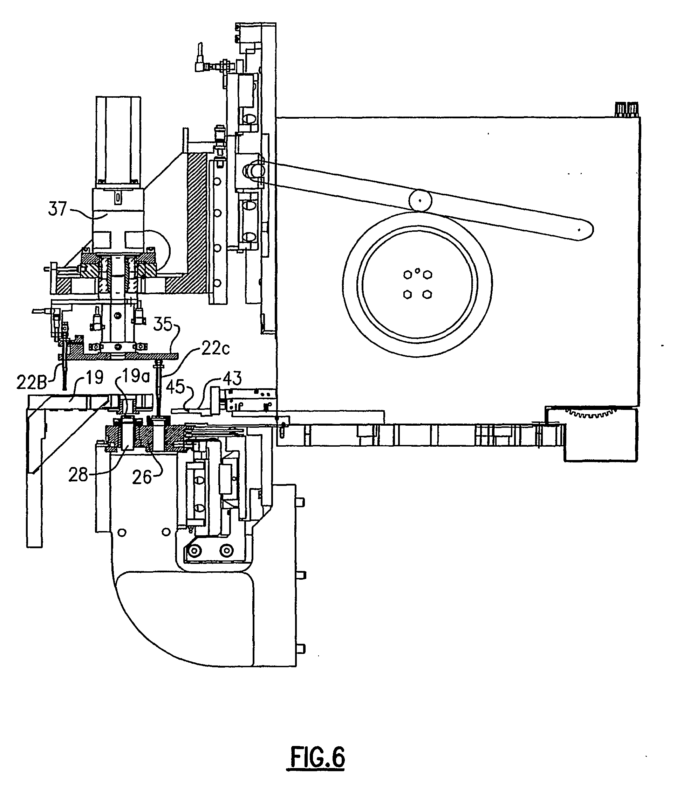

Once the lens 16' has released from its associated mold section 12, the pick-and-place (P&P) unit 22 lowers and passes through hole 19' provided through plate 19 and annulus 19a to engage the lens 16' with an individual P&P vacuum finger 22A. The P&P unit 22 includes an array of pick-up fingers 22A-C, each of which connect to a vacuum source (not shown). In the preferred embodiment, the P&P unit 22 includes three P&P fingers 22A-C mounted to and spaced 120° apart on a rotatable plate 35 which itself is mounted to a servo drive assembly 37 (see Fig. 6). With the lens 16' engaged, the P&P finger 22A raises and the circular plate 35 to which it is mounted rotates 120° about vertical axis x-x such that the P&P finger 22A is now aligned above the lens inspection substation 31. The P&P finger 22A is lowered into the inspection apparatus 33 and the lens is inspected thereby. The P&P finger 22A raises and, if the lens passed inspection, P&P plate 35 rotates 120° to position finger 22A above the lens receptacle 33 which is positioned adjacent the now empty mold section 12 on the pallet 26. Prior to finger 22A releasing the lens, a lens stripper plate 43 moves between the receptacle and P&P finger 22A. A U-shaped opening 45 is formed in plate 43 which is aligned with the receptacle 33 and finger 22A. Finger 22A passes through opening 45 and becomes surrounded by plate 43, at which time it releases its associated lens into receptacle 33. The stripper plate thus acts to prevent lens "fly-away" by ensuring the lens is deposited into its associated receptacle. After lens release, stripper plate 43 is retracted and P&P plate 35 is rotated 120° to again present P&P finger 22A at lens release substation 21 wherein the lens release/inspection/transfer cycle is repeated.

If the lens did not pass inspection at substation 31, the P&P plate 35 rotates the finger 22A over a lens reject bin 47 and releases the rejected lens into the bin. In this instance, the finger 22A will not have a lens to deposit in the receptacle 33 which will be empty as its associated pallet proceeds through the manufacturing line. Appropriate sensors may be employed downstream of module 11 to detect the "no lens" condition of the receptacle and pull that receptacle from the final packaging line.

As previously mentioned, in the preferred embodiment, the rotating P&P plate 35 includes a plurality, but preferably a total of three P&P fingers 22A, 22B and 22C such that three lenses may be processed simultaneously at the substation 21, 31 and 41. Thus, while the first P&P finger 22A is over the inspection station with a lens, P&P finger 22B is simultaneously picking a lens which has been released from a subsequently presented mold section by the dry release head 19. Once P&P fingers 22A and 22B have raised, plate 35 is rotated 120° and the third P&P finger 22C is positioned over the lens release substation 21, the first P&P finger 22A is positioned over the receptacle 33, and the second P&P finger 22B is positioned over the inspection substation 31. At this time, the first P&P finger 22A releases the passed lens into the receptacle 33 while the second P&P finger 22B presents its associated lens to the inspection apparatus at substation 31 while the third P&P finger 22C picks the released lens from its associated mold part 12. The P&P plate again rotates 120° to present the three P&P fingers 22A-C to the next respective substation wherein a second full release/inspect/transfer cycle is initiated with first P&P finger 22A positioned at the lens release substation 21, second P&P finger 22B at the receptacle substation 41 and the third P&P finger at the inspection substation 31. By arranging the substations and P&P fingers in a circular, rotating, endless loop, efficiencies of manufacturing are realized in that a plurality of lenses may be simultaneously processed through the substations at a time. Furthermore, the amount of equipment space is reduced as compared to substations and P&P fingers arranged in a linear operating fashion. In yet another preferred embodiment of the invention, more than one, but preferably three stations 20, 30 and 40 (with each station having three substations 21, 31 and 41) are provided in a single manufacturing module 11. It will be appreciated that three stations 20, 30, and 40 are used to sequentially process the three sets A, B and C of mold and receptacle pairs on a single pallet 26 as they index through each process station of module 11.

The lenses, together with their associated receptacle 33, may then exit module 11 for further downline processing as necessary (e.g., lens hydration, extraction, sterilizing, final packaging, etc.).

## Claims

1. A method for simultaneously processing first, second and third lenses through a process station having a first lens release substation (21), a second lens inspection substation (31), and a third lens transfer substation (41), said method comprising the steps of:
(a) providing a lens release substation (21), a lens inspection substation (31) and a lens deposit substation (41) in an annular array approximately 120° apart;
(b) providing first, second and third lens pick and place fingers (22a, 22b, 22c) mounted to a rotatable plate (35) approximately 120° apart and positioned above the lens release substation (21), lens inspection substation (31) and lens transfer substation (41), respectively;
whereby the rotatable plate (35) rotates at 120° increments and thereby presents the first, second and third pick and place fingers (22a, 22b, 22c) through a cycle wherein each pick and place finger is sequentially moved from the first substation (21) to the second substation (31) and lastly to the third substation (41) and whereby the cycle may be continuously repeated in an automated manner.

2. A method according to claim 1, whereby the lens release substation (21) presents a lens in an associated mold section (12) from which it is picked up by the first pick and place finger (22a), rotating the plate (35) 120° whereby the first pick and place finger presents its first lens at the lens inspection substation (31) and the first lens is inspected thereby, said second pick and place finger (22b) simultaneously picking a second lens at the lens release substation (21) while the first lens is inspected at the lens inspection substation (31), again rotating the plate (35) 120° whereby the first pick and place finger (22a) presents the first lens to a lens receptacle (33) and deposits the lens into the receptacle (33), said second pick and place finger (22b) simultaneously presenting the second lens at the lens inspection substation (31) and the second lens is inspected thereby, said third pick and place finger (22c) simultaneously picking a third lens at said lens release substation (21).

3. A method according to claim 2 whereby said cycle begins to repeat by rotating said plate (35) 120° whereby said first pick and place finger (22a) is presented at said lens release substation (21) to pick a fourth lens, said second pick and place finger (22b) is presented at said lens deposit substation (41) and deposits the second lens into a receptacle (33), and said third pick and place finger (22c) is presented at said lens inspection substation (31) and inspects the third lens.

## Patentansprüche

1. Ein Verfahren zur gleichzeitigen Bearbeitung von ersten, zweiten und dritten Linsen durch eine Bearbeitungsstation, die eine erste Unterstation (21) zur Linsenfreisetzung, eine zweite Unterstation (31) zur Linseninspektion und eine dritte Unterstation (41) zur Linsenübertragung aufweist, das Verfahren umfassend die Schritte aus:
a) Bereitstellen einer Unterstation (21) zur Linsenfreisetzung, einer Unterstation (31) zur Linseninspektion und einer Unterstation (41) zur Linsenablage in einer ringförmigen Anordnung, ungefähr 120° auseinanderliegend;
b) Bereitstellen von ersten, zweiten und dritten Linsenbestückungsfingern (22a, 22b, 22c), die auf einer drehbaren Scheibe (35), ungefähr 120° auseinanderliegend, befestigt sind und die oberhalb der Unterstation (21) zur Linsenfreisetzung, der Unterstation (31) zur Linseninspektion bzw. der Unterstation zur Linsenübertragung (41) positioniert sind;
wobei sich die drehbare Platte (35) um 120° Einheiten dreht und dabei die ersten, zweiten und dritten Bestückungsfinger (22a, 22b, 22c) während eines Zyklusses präsentiert, wobei jeder Bestückungsfinger der Reihe nach von der ersten Unterstation (21) zu der zweiten Unterstation (31) und schließlich zu der dritten Unterstation (41) bewegt wird und wodurch der Zyklus kontinuierlich in automatisierter Form wiederholt werden kann.

2. Verfahren gemäß Anspruch 1, wobei die Unterstation (21) zur Linsenfreisetzung eine Linse in einem dazugehörigen Formteil (12) präsentiert, aus dem diese durch den ersten Bestückungsfinger (22a) abgenommen wird, Drehen der Scheibe (35) um 120°, wobei der erste Bestückungsfinger seine erste Linse an der Unterstation (31) zur Linseninspektion präsentiert und die erste Linse dabei inspiziert wird, der zweite Bestückungsfinger (22b) gleichzeitig eine zweite Linse an der Unterstation (21) zur Linsenfreisetzung abnimmt, während die erste Linse an der Unterstation (31) zur Linseninspektion inspiziert wird, erneutes Drehen der Scheibe (35) um 120°, wobei der erste Bestückungsfinger (22a) die erste Linse einem Linsenbehälter (33) präsentiert und die Linse in den Behälter (33) ablegt, der zweite Bestückungsfinger (22b) gleichzeitig die zweite Linse der Unterstation zur Linseninspektion zeigt und die zweite Linse dabei inspiziert wird, der dritte Bestückungsfinger (22c) gleichzeitig eine dritte Linse an der Unterstation (21) zur Linsenfreisetzung abnimmt.

3. Verfahren gemäß Anspruch 2, wobei sich der Zyklus durch Drehen der Scheibe (35) um 120° zu wiederholen beginnt, wobei der erste Bestückungsfinger(22a) an der Unterstation (21) zur Linsenfreisetzung präsentiert wird um eine vierte Linse abzunehmen, der zweite Bestückungsfinger (22b) an der Unterstation (41) zur Linsenablage präsentiert wird und die zweite Linse in einen Behälter (33) ablegt und der dritte Bestückungsfinger (22c) an der Unterstation (31) zur Linseninspektion präsentiert wird und die dritte Linse inspiziert.

## Revendications

1. Procédé pour traiter simultanément une première, une deuxième et une troisième lentilles dans une station de traitement ayant une première sous-station de délivrance de lentilles (21) une deuxième sous-station de contrôle de lentilles (31) et une troisième sous-station de transfert de lentilles (41), ledit procédé comprenant l'étape de :
(a) disposer une sous-station de délivrance de lentilles (21), une sous-station de contrôle de lentilles (31) et une sous-station de dépôt de lentilles (41) décalées d'à peu près 120° sur une aire annulaire ;
(b) disposer un premier, un deuxième et un troisième doigts de prélèvement et d'insertion de lentilles (22a, 22b, 22c) montés sur une plaque rotative (35) espacés d'environ 120° et disposés au-dessus de la sous-station de délivrance de lentilles (21), de la sous-station de contrôle de lentilles (31) et de la sous-station de transfert de lentilles (41), respectivement,
la plaque rotative (35) tournant par incrément de 120° et présentant de ce fait le premier, le deuxième et le troisième doigts de prélèvement et d'insertion (22a, 22b, 22c) selon un cycle dans lequel chaque doigt de prélèvement et d'insertion est déplacé séquentiellement de la première sous-station (21) à la deuxième sous-station (31) et enfin à la troisième (41) et le cycle pouvant être répété continuellement de manière automatique.

2. Procédé selon la revendication 1, dans lequel la sous-station de délivrance de lentilles (21) présente une lentille dans une partie de moule (12) associée, de laquelle elle est prélevée par le premier doigt de prélèvement et d'insertion (22a) en tournant la plaque (35) de 120°, le premier doigt de prélèvement et d'insertion présentant sa première lentille à la sous-station de contrôle de lentilles (31) et la première lentille y étant contrôlée, ledit deuxième doigt de prélèvement et d'insertion de lentilles (22b) prélevant simultanément une deuxième lentille à la sous-station de délivrance de lentilles (21) pendant que la première lentille est contrôlée à la sous-station de contrôle de lentilles (31), en tournant à nouveau la plaque (35) de 120°, le premier doigt de prélèvement et d'insertion (22a) présentant la première lentille à un réceptacle de lentilles (33) et déposant la lentille dans le réceptacle(33), ledit deuxième doigt de prélèvement et d'insertion de lentilles (22b) présentant simultanément la lentille à la deuxième sous-station de contrôle de lentilles (31) et la deuxième lentille y étant contrôlée, ledit troisième doigt de prélèvement et d'insertion de lentilles (22c) prélevant simultanément une troisième lentille de ladite sous-station de délivrance de lentilles (21).

3. Procédé selon la revendication 2, dans lequel ledit cycle commence à se répéter par rotation de ladite plaque (35) de 120°, ledit premier doigt de prélèvement et d'insertion (22a) étant présenté à ladite sous-station de délivrance de lentilles (21) pour prélever une quatrième lentille, ledit deuxième doigt de prélèvement et d'insertion de lentilles (22b) étant présenté à ladite troisième sous-station de transfert de lentilles (41) et déposant la deuxième lentille dans le réceptacle (33) et ledit troisième doigt de prélèvement et d'insertion de lentilles (22c) étant présenté à ladite sous-station de contrôle de lentilles (31) où la troisième lentille est contrôlée.
